# EUROPÄISCHE PATENTANMELDUNG

(11) **EP 1 389 727 A2**
(43) Veröffentlichungstag der Anmeldung: **18.02.2004**
(21) Anmeldenummer: 03016746.4
(22) Anmeldetag: 23.07.2003
(51) Int. Cl.: F41H 3/02

(54) **Wärmetarnplane**

(30) Priorität: 14.08.2002 DE 20212487 U
(71) Anmelder: C.F. PLOUCQUET GmbH & Co., 89522 Heidenheim (DE)
(72) Erfinder: Hellwig, Manfred, 74613 Oehringen (DE); Weber, Joerg, 89522 Heidenheim (DE)
(74) Vertreter: Lorenz, Werner, Dr.-Ing.

(57) **Zusammenfassung**

Eine Wärmetarnplane zur Abdeckung von Wärmequellen gegen Erkennung in einem Wärmebild weist eine Trägertextilie aus Glasgewirke oder Glasgewebe auf, die auf der von der Wärmequelle abgewandten Seite mit einem Compound (5) versehen ist, dessen Remissionswerte im Bereich einer sichtoptischen Tarnung und/oder im Infrarotbereich liegen. Die Trägertextilie (1) ist auf der der Wärmequelle zugewandten Seite mit einer Polyesterfolie (2) versehen, auf die eine Wärmestrahlung reflektierende Bedampfung (3) aufgebracht ist.

## Beschreibung

Die Erfindung betrifft eine Wärmetarnplane zur Abdeckung von Wärmequellen gegen Erkennung in einem Wärmebild mit einer Trägertextilie aus Glasgewirke oder Glasgewebe, die auf der von der Wärmequelle abgewandten Seite mit einem Compound versehen ist, dessen Remissionswerte im Bereich einer sichtoptischen Tarnung und/oder im Infrarotbereich liegen.

Eine Wärmetarnplane dieser Art ist in der DE 297 16 362.0 beschrieben. Sie dient dazu, warme oder heiße Stellen, wie z.B. den Motor eines Fahrzeuges oder auch einer stationären Einrichtung derart abzudecken, dass sie nicht geortet werden können. Derart heiße Stellen werden auch als Hot-Spot bezeichnet.

Die Tarnplane wird im allgemeinen unter Tarnnetzen verwendet, welche eine Tarnung vor Infrarot-Kameras bzw. Wärmebild-Detektoren und gegenüber einer Radarerfassung ergeben. Das Tarnnetz verhindert dabei, dass auf einen Gegenstand auftreffende Mikrowellen von diesem zurück reflektiert werden. Ebenso wird dadurch eine Identifizierung mittels Sensoren im Infrarot- bzw. Wärmebildbereich vermieden.

Problematisch wird die Tarnung jedoch dann, wenn unter dem Tarnnetz Hot-Spots vorhanden sind, wie z.B. der Motor eines Fahrzeuges. Hierfür ist die eingangs erwähnte Wärmetarnplane vorgesehen, die verhindert, dass Wärmestrahlen von Objekten, die sich auf der Seite der Wärmetarnplane mit der Aluminiumpulver aufweisenden Silikonelastomerbeschichtung befinden, ungehindert durchtreten und somit trotz eines eventuell darüber gelegten Tarnnetzes mittels eines Wärmebildgerätes lokalisiert werden können. Auf der von der Wärmequelle abgewandten Seite befindet sich ein Polyurethan- oder Silikonelastomer mit Farbpigmenten zur Tarnung gegen eine sichtoptische Erkennung. Gleichzeitig kann auf diese Weise eine entsprechende Oberflächenfarbgestaltung erreicht werden, die an die Umgebung und/oder ein darüber liegendes Tarnnetz angepasst ist.

Der vorliegenden Erfindung liegt die Aufgabe zugrunde, die vorbekannte Wärmetarnplane bezüglich ihrer Wirksamkeit noch weiter zu verbessern, insbesondere gegen Erkennung bei solarer Strahlung und auch bei langwelliger Wärmestrahlung in den Bereichen 3 bis 14 µm, da dies die Bereiche sind in denen im allgemeinen Wärmebilderfassungsgeräte arbeiten.

Erfindungsgemäß wird dies dadurch gelöst, dass die Trägertextilie auf der der Wärmequelle zugewandten Seite mit einer Polyesterfolie versehen ist, auf die eine Wärmestrahlung reflektierende Bedampfung aufgebracht ist.

Während bei der vorbekannten Wärmetarnplane es nur möglich ist, im Bereich der solaren Strahlung (maximal bis ca. 5 µm) eine Reflexion von über 50 % zu erreichen, ist die Wirksamkeit in einem Bereich von 8 bis 14 µm geringer.

Es hat sich nun herausgestellt, dass mit der erfindungsgemäßen Wärmetarnplane nicht nur im Wellenlängenbereich der solaren Strahlung bis 6 µm, sondern auch in einem Bereich von 8 bis 14 µm eine hohe Wirksamkeit erreicht wird. Darüber hinaus wurde festgestellt, dass auch ein sehr hoher Reflexionsgrad, von über 80 % durchgehend, gegen solare Strahlung bzw. Wärmestrahlung erreicht wird, womit sich insgesamt eine hohe Wirksamkeit in einem Bereich von ca. 2 bis 14 µm ergibt. Damit ist sowohl eine Wirksamkeit gegenüber aktiven Signaturen durch Strahlen aussendende Wärmebildkameras als auch gegenüber passiven Signaturen bezüglich solarer Erwärmung (Eigenstrahlung) durch Wärmebildkameras, die die von dem Hot-Spot abgestrahlte Wärme aufzeichnen, möglich.

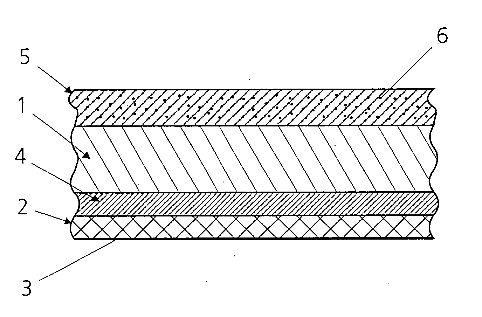

Vorteilhafte Weiterbildungen und Ausgestaltungen ergeben sich aus den Unteransprüchen und aus dem nachfolgend anhand der Zeichnung beschriebenen Ausführungsbeispiel.

In der Zeichnung ist ausschnittsweise, stark vergrößert und vereinfacht die erfindungsgemäße Wärmetarnplane dargestellt. Sie weist als Basis eine Trägertextilie 1 auf, welche aus Glasgewirke oder Glasgewebe besteht. Bei Ausbildung aus Glasgewebe wird eine Kreuzköperbindung gewählt, mit einem Flächengewicht von 300 bis 500 g/m², vorzugsweise 400 g/m². Auf diese Weise wird eine hohe Knickbeständigkeit erreicht. Die Trägertextilie 1 wird einseitig mit einer Polyesterfolie 2 beschichtet, die mit einer eine Wärmestrahlung reflektierenden Bedampfung in Form einer Aluminiumbedampfung 3 laminiert wird.

Die Laminierung bzw. Verklebung erfolgt mittels einer Polyuretan- oder Silikonschicht 4. Selbstverständlich kann jedoch für die Verklebung auch eine andere Kleberart verwendet werden. Die Dicke der Kleberschicht kann zwischen 40 und 80 g/m², vorzugsweise zwischen 50 und 60 g/m² betragen. Die Rückseite bzw. die von der Wärmequelle abgewandte Seite wird im Direktverfahren beschichtet mit einer auf einem nahe, die IR-Remisionswerte eingestelltem Compound 5. Das Compound 5 kann aus Polyuretanpolymeren oder Silikonelastomeren bestehen. Der Compound ist mit IR-Pigmenten, wie z.B. Metallpigmente 6, versehen, um eine Tarnung im sichtoptischen und im nahen Infrarotbereich zu erreichen. Als Metallpigmente können z.B. Chromoxide verwendet werden. Zusätzlich ist der Compound 5 noch mit bekannten Flammschutzmitteln versehen. Das Flächengewicht des Compoundes kann zwischen 60 und 125 g/m², vorzugsweise zwischen 80 und 100 g/m² betragen. Durch den Aufbau der Tarnplane mit den genannten Flächengewichten wird zusätzlich eine hohe Flexibilität über einen breiten Temperaturbereich bei sehr guter mechanischer Festigkeit und schwerer Entflammbarkeit erreicht.

Mit der erfindungsgemäßen Tarnplane wird ein hoher Reflexionsgrad von über 80 % sowohl gegenüber solarer Strahlung, als auch Wärmestrahlung der Wärmequelle erreicht.

## Patentansprüche

1. Wärmetarnplane zur Abdeckung von Wärmequellen gegen Erkennung in einem Wärmebild mit einer Trägertextilie (1) aus Glasgewirke oder Glasgewebe, die auf der von der Wärmequelle abgewandten Seite mit einem Compound (5) versehen ist, dessen Remissionswerte im Bereich einer sichtoptischen Tarnung und/oder im Infrarotbereich liegen,
**dadurch gekennzeichnet, dass**
die Trägertextilie (1) auf der der Wärmequelle zugewandten Seite mit einer Polyesterfolie (2) versehen ist, auf die eine Wärmestrahlung reflektierende Bedampfung (3) aufgebracht ist.

2. Wärmetarnplane nach Anspruch 1,
**dadurch gekennzeichnet, dass**
die als Wärmestrahlung reflektierende Bedampfung (3) Aluminium auf die Polyesterfolie (2) aufgedampft ist.

3. Wärmetarnplatte nach Anspruch 1 oder 2,
**dadurch gekennzeichnet, dass**
die Polyesterfolie (2) über eine Kleberschicht (4) mit der Trägertextilie (1) verbunden ist.

4. Wärmetarnplane nach Anspruch 3,
**dadurch gekennzeichnet, dass**
die Kleberschicht Polyurethan aufweist.

5. Wärmetarnplane nach Anspruch 3,
**dadurch gekennzeichnet, dass**
die Kleberschicht Silikon aufweist.

6. Wärmetarnplane nach Anspruch 3,
**dadurch gekennzeichnet, dass**
das Flächengewicht der Kleberschicht (4) zwischen 40 und 80 g/m² beträgt.

7. Wärmetarnplane nach Anspruch 6,
**dadurch gekennzeichnet, dass**
das Flächengewicht der Kleberschicht (4) zwischen 50 und 60 g/m² beträgt.

8. Wärmetarnplane nach Anspruch 1,
**dadurch gekennzeichnet, dass**
der Compound (5) Polyurethanpolymere aufweist, die Metallpigmente (6) enthalten.

9. Wärmetarnplane nach Anspruch 1,
**dadurch gekennzeichnet, dass**
der Compound (5) Silikonelastomere aufweist, die Metallpigmente (6) enthalten.

10. Wärmetarnplane nach Anspruch 8 oder 9,
**dadurch gekennzeichnet, dass**
der Compound (5) ein Flächengewicht von 60 bis 120 g/m² aufweist.

11. Wärmetarnplane nach Anspruch 10,
**dadurch gekennzeichnet, dass**
der Compound (5) ein Flächengewicht von 80 bis 100 g/m² aufweist.

12. Wärmetarnplane nach Anspruch 1,
**dadurch gekennzeichnet, dass**
die Trägertextilie (1) ein Flächengewicht von 250 bis 500 g/m², vorzugsweise 400 g/m² besitzt.

13. Wärmetarnplane nach Anspruch 1,
**dadurch gekennzeichnet, dass**
die Trägertextilie (1) aus Glasgewebe in Kreuzköperbindung besteht.
